# EUROPÄISCHE PATENTSCHRIFT

(11) **EP 4 132 807 B1**
(45) Veröffentlichungstag und Bekanntmachung des Hinweises auf die Patenterteilung: **16.07.2025**
(21) Anmeldenummer: 21717010.9
(22) Anmeldetag: 31.03.2021
(51) Int. Cl.: B60K 6/547, B60K 6/48, B60W 10/08, B60W 10/111, B60W 10/113, B60W 20/30, B60W 30/19, F16H 61/04, F16H 61/68, F16H 63/18, B60W 50/00, F16H 61/00, F16H 61/28

(54) **VERFAHREN ZUM EINLERNEN EINER SCHALTWALZE IN EINEM HYBRIDANTRIEBSSTRANG**
METHOD FOR TEACHING-IN A GEAR SHIFT DRUM IN A HYBRID DRIVE TRAIN
PROCÉDÉ D'ENTRAÎNEMENT D'UN TAMBOUR DE CHANGEMENT DE RAPPORT DANS UNE CHAÎNE CINÉMATIQUE HYBRIDE

(30) Priorität: 06.04.2020 DE 102020204440
(43) Veröffentlichungstag der Anmeldung: 15.02.2023
(73) Patentinhaber: Magna PT B.V. & Co. KG, 74199 Untergruppenbach (DE)
(72) Erfinder: SABERI, Jens, 70439 Stuttgart (DE); HUMMEL, Marius, 74072 Heilbronn (DE)
(74) Vertreter: Reuter, Silke Beatrix
(86) Internationale Anmeldenummer: PCT/EP2021/058481
(87) Internationale Veröffentlichungsnummer: WO 2021/204628

(56) Entgegenhaltungen:
- EP-A1- 1 286 088
- EP-A1- 3 613 621
- DE-A1- 19 914 394

## Beschreibung

Die vorliegende Erfindung betrifft ein Verfahren zum Einlernen einer Schaltwalze in einem Hybridantriebsstrang.

Hybridantriebsstränge für Kraftfahrzeuge sind in den letzten Jahren populär geworden. Hybridantriebsstränge können dabei auf unterschiedliche Art und Weise realisiert werden.

Ein Beispiel sind sogenannte serielle Hybridantriebsstränge, bei denen ein Ausgang eines Verbrennungsmotors mit einem Generator verbunden ist, wobei ein Abtrieb des Hybridantriebsstranges mit einem elektrischen Motor verbunden ist, und wobei Motor und Generator an eine gemeinschaftliche Batterie angeschlossen sind.

Parallele Hybridantriebsstränge sind dazu in der Lage, sowohl verbrennungsmotorische als auch elektromotorische Antriebsleistung auf einen Abtrieb zu übertragen. Hier ist in manchen Fällen eine elektrische Maschine um eine Kurbelwelle herum angeordnet, und die Kurbelwelle ist über eine Anfahrkupplung mit einem Abtrieb verbindbar, und zwar in der Regel über ein Stufengetriebe.

Auch Hybridantriebsstränge, bei denen ein Verbrennungsmotor eine Achse des Fahrzeugs antreibt und eine elektrische Maschine eine andere Achse des Fahrzeugs antreibt, sind allgemein bekannt (axle-split).

Ferner sind Parallel-Hybridantriebsstränge mit Doppelkupplungsgetrieben bekannt, wobei eine elektrische Maschine an einen Eingang von einem der Teilgetriebe angeschlossen sein kann, oder mit einem Ausgang des Doppelkupplungsgetriebes verbunden sein kann. Der Einsatz von Doppelkupplungsgetrieben ermöglicht einen zugkraftunterbrechungsfreien Gangwechsel.

Getriebeanordnungen weisen zum Einrichten der unterschiedlichen Gangstufen eine Mehrzahl von Schaltkupplungen auf. Schaltkupplungen dienen dazu, einen Radsatz in den Leistungsfluss zu bringen (hierbei wird ein Losrad eines Radsatzes mit einer zugeordneten Welle verbunden). Die Ansteuerung der Schaltkupplung erfolgt dabei beispielsweise über eine Schaltvorrichtung die eine Schaltwalze umfasst. Der Verdrehwinkel der Schaltwalze muss dabei genau bekannt sein.

Aus der EP 3 613 621 A1 ist ein Hybridantriebstrang bekannt, der eine erste Antriebsmaschine in Form eines Verbrennungsmotors, eine zweite Antriebsmaschine in Form einer elektrischen Maschine sowie eine Getriebeanordnung umfasst. Die Getriebeanordnung weist eine Vielzahl von Zahnradstufen in Form von Radsätzen auf, die über Schaltelemente schaltbar sind. Die Getriebeanordnung ist über ein weiteres Schaltelement mit der ersten Antriebsmaschine verbindbar und des Weiteren mit der zweiten Antriebsmaschine verbindbar ausgeführt.

Schaltwalzen, sowie Verfahren zum Referenzieren der Drehstellung der Schaltwalzen sind grundsätzlich bekannt. Hierbei sind die Schaltwalzen häufig mit sogenannten Endanschlägen ausgeführt, wobei ein Positionssensor die entsprechende Winkelposition des Endanschlags erfassen kann.

Das Dokument WO 2015/149797 A1 offenbart beispielsweise eine Betätigungsvorrichtung zum Betätigen eines Getriebes, mit einer drehbaren Schaltwalze, wobei ein mit der Schaltwalze drehfest verbundener Endanschlag derart mit einer Signalindikationseinrichtung zusammenwirkt, dass bei einem relativen Verschieben von der Signalindikationseinrichtung und dem Endanschlag in einer bestimmten Drehstellung der Schaltwalze ein Positionssignal erzeugbar ist. Das Positionssignal ist durch einen die Antriebskraft des Antriebsmotors in der bestimmten Drehstellung verändernden, mechanischen Widerstand erzeugbar.

Das Dokument DE 199 14 394 A1 offenbart ein Verfahren zur Steuerung eines Schaltmechanismus eines automatisierten Schaltgetriebes während eines Schaltvorgangs des Schaltgetriebes.

Aus dem Dokument EP 1 286 088 A1 ist es bekannt, an einer Schaltwalze einen Magnetring festzulegen, der zur Drehpositionserfassung der jeweiligen Schaltwalze mittels geeigneter Sensoren ausgebildet ist.

Wie oben beschrieben, kann zum Referenzieren der Drehposition ein rotatorischer Endanschlag in die Schaltwalzen integriert werden. Hierbei ist jedoch die Verdrehbarkeit der Schaltwalzen begrenzt. Breite und massive Anschläge reduzieren den zur Verfügung stehenden Verdrehwinkel der Schaltwalze zum Teil signifikant.

Bei bekannten Schaltwalzenanordnungen, die einen fest mit dem Schaltwalzenkörper verbundenen Anschlag aufweisen, ergibt sich die maximale Verdrehbarkeit des Schaltwalzenkörpers durch 360° abzüglich des Umfangswinkels des Anschlagelementes und abzüglich eines Umfangswinkels des Referenzelementes, das beispielsweise ein gehäusefestes Element, wie ein Gehäuseanschlag sein kann. Hier kann der maximale Verdrehwinkel im Stand der Technik nur bei 290° liegen, wenn sich beispielsweise das Anschlagelement über 35° erstreckt und wenn sich der Gehäuseanschlag ebenfalls um 35° erstreckt.

Insbesondere durch die oben bereits genannte Hybridisierung von Getrieben entstehen neue Herausforderungen an die Schaltvorrichtungen. Unter Umständen ist es vorteilhaft, wenn die Schaltwalze in beiden Verdrehrichtungen beliebig/endlos verdreht werden kann.

Sofern Schaltwalzenanordnungen eine über 360° hinausgehende Verdrehung erfordern, sind die aus dem Stand der Technik bekannten Verfahren zum Einlernen der Schaltwalze, die Endanschläge benötigen, auf diese Art und Weise nicht möglich.

Es ist vor diesem Hintergrund eine Aufgabe der Erfindung ein Verfahren zum Einlernen einer Schaltwalze in einem Hybridantriebsstrang zu schaffen, welches bei einer Schaltwalze, die in beide Verdrehrichtungen endlos verdreht werden kann, eingesetzt werden kann.

Die obige Aufgabe wird gelöst durch das im Patentanspruch 1 angegebene Verfahren.

Durch das oben genannte Verfahren zum Einlernen einer Schaltwalze ist auf einfache Art und Weise eine Bestimmung von virtuellen Endanschlägen bei einer endlos verdrehbaren Schaltwalze zwecks Referenzierung des Schaltwinkels realisierbar.

Dies ist dadurch möglich, da ausgehend von einer Neutralstellung der Getriebeanordnung des Hybridantriebsstrangs der einem ersten Schaltzustand der Schaltwalze entspricht, mittels der elektrischen Maschine eine kleine Drehzahl erzeugt wird, wodurch eine Differenzdrehzahl an mindestens zwei Schaltelementen der Getriebeanordnung entsteht.

Wobei anschließend in einem weiteren Verfahrensschritt die Schaltwalze in einer ersten Drehrichtung in einen weiteren Schaltzustand verdreht wird, und ein erstes Schaltelement mit der Differenzdrehzahl geschaltet wird, so dass die elektrische Maschine schlagartig auf Null abgebremst wird, wobei ein Drehzahlsignal der elektrischen Maschine erzeugt wird und dieses Drehzahlsignal der ersten Referenzposition als virtueller Endanschlag zugeordnet wird.

Wobei in einem weiteren Verfahrensschritt die Schaltwalze wieder zurück in die Neutralstellung verdreht wird.

Anschließend erneut mittels der elektrischen Maschine eine kleine Drehzahl erzeugt wird.

Wobei in einem abschließenden Verfahrensschritt die Schaltwalze in eine zweite Drehrichtung in einen noch weiteren Schaltzustand verdreht wird, und ein zweites Schaltelement mit der Differenzdrehzahl geschaltet wird, so dass die elektrische Maschine schlagartig auf Null abgebremst wird, wobei ein Drehzahlsignal der elektrischen Maschine erzeugt wird und dieses Drehzahlsignal der zweiten Referenzposition als virtueller Endanschlag zugeordnet wird.

Ausführungsbeispiele der Erfindung sind in der Zeichnung dargestellt und werden in der nachfolgenden Beschreibung näher erläutert. Es zeigen:
- Fig. 1: eine schematische Darstellung eines Hybridantriebsstrangs eines Kraftfahrzeugs, wobei der Hybridantriebsstrang zur Durchführung des erfindungsgemäßen Verfahrens ausgelegt ist.
- Figur 2: eine Darstellung eines Ausschnitts einer Schaltwalze
- Figur 3a-3d: unterschiedliche Schaltzustände der Kupplungen K0 und K2 bei Verdrehung der Schaltwalze in eine erste Drehrichtung anhand einer Matrix
- Figur 4: eine schematische Darstellung der Schaltwalze mit den unterschiedlichen Schaltzuständen S1-S4; und
- Figur 5a-5d: die Verfahrensschritte zur Durchführung des erfindungsgemäßen Verfahrens in einer schematischen Darstellung.

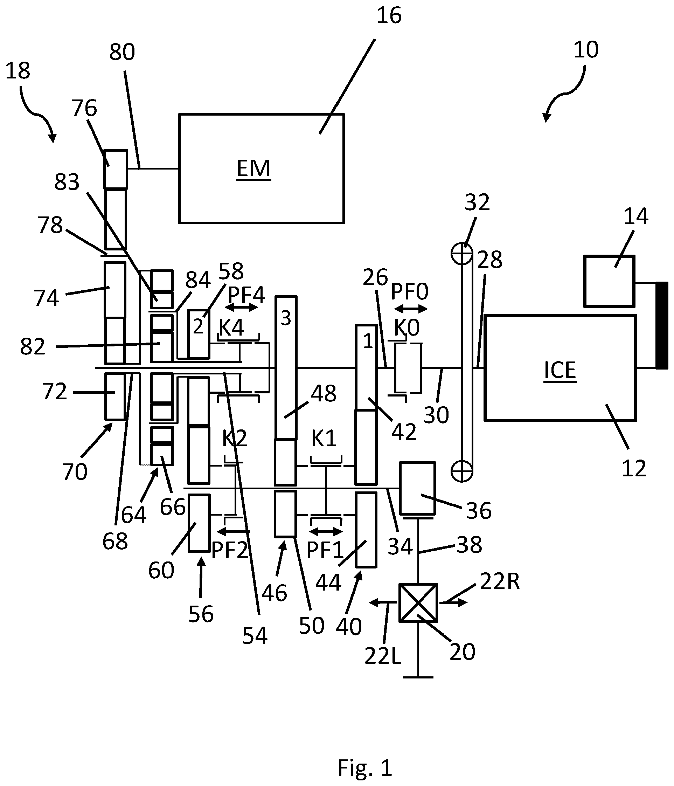

In Fig. 1 ist in schematischer Form ein Hybridantriebsstrang für ein Kraftfahrzeug dargestellt und generell mit 10 bezeichnet.

Der Hybridantriebsstrang 10 weist eine erste Antriebsmaschine in Form eines Verbrennungsmotors 12 auf. Der Verbrennungsmotor 12 kann mit einem Anlasser 14 verbunden sein. Ferner beinhaltet der Hybridantriebsstrang 10 eine zweite Antriebsmaschine in Form einer elektrischen Maschine 16.

Der Hybridantriebsstrang 10 weist ferner eine Getriebeanordnung 18 auf, die mit dem Verbrennungsmotor 12 und mit der elektrischen Maschine 16 verbunden ist.

Die Getriebeanordnung 18 weist eine Getriebeeingangswelle 26 auf. Ein Endbereich der Getriebeeingangswelle 26 umfasst dabei eine auf der Getriebeeingangswelle 26 gelagerte Hohlwelle 54. Die Verbindung zwischen der Getriebeeingangswelle 26 und der drehbar auf der Getriebeeingangswelle gelagerten Hohlwelle 54 ist wie nachfolgend noch näher beschrieben über eine Schaltanordnung K4 herstellbar.

Ferner ist ein Eingangsglied 28 (Ausgangswelle des Verbrennungsmotors) eines Massenschwungrades 32 mit einer Kurbelwelle des Verbrennungsmotors 12 verbunden. Ein Ausgangsglied 30 des Massenschwungrades 32 ist über eine Schaltelement K0, welches als Klauenkupplung ausgebildet sein kann, mit der Getriebeeingangswelle 26 verbindbar. Das Schaltelement K0 kann zwei Schaltstellungen einnehmen. Die erste Schaltstellung ist eine Neutralstellung, in der keine Verbindung zwischen Verbrennungsmotor 12 und Getriebeeingangswelle 26 hergestellt ist. Die zweite Schaltstellung ist eine Stellung, die eine Verbindung zwischen Verbrennungsmotor 12 und Getriebeeingangswelle 26 herstellt. Das Schalten des Schaltelements K0 ist durch den Doppelpfeil PF0 dargestellt
Die Getriebeanordnung 18 weist ferner eine Getriebeausgangswelle 34 auf, die parallel versetzt zu der Getriebeeingangswelle 26 ausgerichtet ist.

Ausgangsseitig ist die Getriebeanordnung 18 mit einem Differential 20 verbunden, mittels dessen Antriebsleistung auf angetriebene Räder 22L, 22R verteilbar ist. Hierfür ist an der Getriebeausgangswelle 34 endseitig ein Abtriebszahnrad 36 festgelegt, das mit einem Differentialzahnrad 38 in Eingriff steht. Das Differentialzahnrad 38 ist drehfest mit einem Differentialkorb des Differentials 20 verbunden.

Die Getriebeanordnung 18 umfasst drei Zahnradstufen, die wie nachfolgend beschrieben über drei Radsätze gebildet werden.

Die Getriebeeingangswelle 26 und die Getriebeausgangswelle 34 sind über einen ersten Radsatz 40 miteinander verbunden, der ein an der Getriebeeingangswelle 26 gelagertes Festrad 42 und ein mit der Getriebeausgangswelle 34 verbundenes Losrad 44 umfasst. Die Zähne des Losrads 44 stehen in kämmenden Eingriff mit den Zähnen des Festrads 42. Der erste Radsatz 40 ist einer Vorwärtsgangstufe 1 zugeordnet, die die niedrigste Vorwärtsgangstufe der Getriebeanordnung 18 bildet.

Die Getriebeeingangswelle 26 ist ferner über einen zweiten Radsatz 46 mit der Getriebeausgangswelle 34 verbunden, wobei der zweite Radsatz 46 ein an der Getriebeeingangswelle 26 drehbar gelagertes Festrad 48 sowie ein Losrad 50 aufweist, das an der Getriebeausgangswelle 34 festgelegt ist. Die Zähne des Losrads 48 stehen in kämmenden Eingriff mit den Zähnen des Festrads 50. Der zweite Radsatz 46 ist einer Vorwärtsgangstufe 3 zugeordnet.

Zwecks Herstellung einer drehfesten Verbindung des Losrads 44 oder des Losrads 50 ist zwischen den beiden Losrädern auf der Getriebeausgangswelle 34 ein Schaltelement K1 angeordnet. Das Schaltelement K1 kann folgende drei Schaltstellungen einnehmen.

Eine Neutralstellung, in der keine der beiden Losräder 44, 50 in einer drehfesten Verbindung mit der Getriebeausgangswelle 34 verbunden ist. Eine Schaltstellung in der das Schaltelement K1 in eine axial nach rechts verlagerte Stellung geschaltet ist, wodurch eine drehfeste Verbindung zwischen Losrad 44 und Getriebeausgangswelle 34 hergestellt ist. Hierdurch wird die Getriebeeingangswelle 26 über den ersten Radsatz 40 mit der Getriebeausgangswelle 34 verbunden und ein fakultativer Drehmomentübertragungspfad ist realisiert.

Des Weiteren eine Schaltstellung in der das Schaltelement K1 in eine axial nach links verlagerte Stellung geschaltet ist, wodurch eine drehfeste Verbindung zwischen Losrad 50 und Getriebeausgangswelle 34 hergestellt ist. Hierdurch wird die Getriebeeingangswelle 26 über den zweiten Radsatz 46 mit der Getriebeausgangswelle 34 verbunden. Die axiale Verlagerung des Schaltelements K1 ist durch den Doppelpfeil PF1 dargestellt. Das Schaltelement K1 stellt eine zweiseitige formschlüssige Kupplung dar. Eine nähere Beschreibung erfolgt an dieser Stelle nicht, da die Ausführung dem Fachmann bekannt ist. Üblicherweise ist das Schaltelement als Synchronisationseinheit ausgeführt.

Der Begriff der Verbindung soll vorliegend bedeuten, dass über diese Verbindung Antriebsleistung übertragen werden kann. Eine Verbindung kann folglich eine mögliche (beispielsweise über eine Schaltkupplung herstellbare) Verbindung sein, kann jedoch auch eine Verbindung sein, die beispielsweise die verbundenen Glieder in ein festes Drehzahlverhältnis setzt.

Bei Verstellen des Schaltelements K0 in die zweite Schaltstellung, kann ein verbrennungsmotorischer Betrieb mittels des ersten Radsatzes 40 eingerichtet werden, wobei die Vorwärtsgangstufe 1 eingelegt ist. Alternativ kann ein Fahrbetrieb mittels des Verbrennungsmotors 12 über das Schaltelement K0 eingerichtet werden, bei dem der zweite Radsatz 46 in den Leistungsfluss geschaltet ist, um die Vorwärtsgangstufe 3 einzulegen.

Die Getriebeeingangswelle 26 ist über eine Brückenkupplung mit der Hohlwelle 54 verbindbar.

Die Getriebeanordnung 18 beinhaltet ferner einen Überlagerungsradsatz in Form eines Planetengetriebes 64. Derartige Planetengetriebe sind grundsätzlich bekannt und werden an dieser Stelle nicht weiter beschrieben. Sie umfassen grundsätzlich ein Hohlrad 66, Planetenräder 83 die auf einem Planetenträger gelagert sind und ein Sonnenrad 82.

Das Sonnenrad 82 als erstes Eingangsglied des Planetengetriebes 64 ist drehfest mit der Hohlwelle 54 verbunden.

Das Hohlrad 66 als zweites Eingangsglied ist an einem endseitig angeordneten Hohlwellenabschnitt 68 angebunden, wobei der Hohlwellenabschnitt 68 koaxial um die Getriebeeingangswelle 26 ausgebildet und drehbar in Bezug auf die Getriebeeingangswelle 26 ist.

Die Planetenräder 83 sind auf dem Planetenträger gelagert, der ein weiteres Eingangsglied bildet.

Auf dem Planetenträger ist ein erstes Losrad 58 eines dritten Radsatzes 56 drehbar gelagert. Der dritte Radsatz 56 weist ferner ein zweites Losrad 60 auf, das drehbar an der Getriebeausgangswelle 34 gelagert ist. Der dritte Radsatz 56 bildet die zweite Gangstufe.

Das erste Losrad 58 kann mittels einer Blockierkupplung drehfest mit der Hohlwelle 54 gekoppelt werden. Das zweite Losrad 60 kann mittels eines Schaltelements K2 drehfest mit der Getriebeausgangswelle 34 gekoppelt werden. Das Schaltelement K2 kann folgende zwei Schaltstellungen einnehmen.

Eine Neutralstellung, in der das Losrad 60 drehbar auf der Getriebeausgangswelle 34 gelagert ist. Eine zweite Schaltstellung in der das Schaltelement K2 in eine axial nach links verlagerte Stellung geschaltet ist, wodurch eine drehfeste Verbindung zwischen zweitem Losrad 60 und Getriebeausgangswelle 34 hergestellt ist. Hierdurch kann die Getriebeeingangswelle 26 bzw. die Hohlwelle 54 über den dritten Radsatz 56 mit der Getriebeausgangswelle 34 verbunden und ein weiterer fakultativer Drehmomentübertragungspfad realisiert werden.

Die axiale Verlagerung des Schaltelements K2 ist durch den Pfeil PF2 dargestellt. Das Schaltelement K2 stellt eine einseitige formschlüssige Kupplung dar.

Die Brückenkupplung und die Blockierkupplung sind in einer Schaltanordnung K4 integriert, die drei Schaltstellungen besitzt und mittels eines einzelnen Betätigungsgliedes wie beispielsweise eine einzelne Schaltmuffe betätigbar ist.

In einer ersten Schaltstellung in der die Schaltanordnung K4 in eine nach links verlagerte Stellung geschaltet ist, ist die Blockierkupplung geschlossen und die Brückenkupplung ist geöffnet. Dies hat zur Folge, dass das erste Losrad 58 drehfest mit dem Planetenträger gekoppelt ist und die Verbindung mit der Getriebeeingangswelle 26 getrennt ist. Das Planetengetriebe 64 ist in einer verblockten Situation.

In einer zweiten nach rechts verlagerten Stellung der Schaltanordnung K4 ist die Brückenkupplung geschlossen und die Blockierkupplung ist geöffnet. Dies hat zur Folge, dass das erste Losrad 58 drehbar auf dem Planetenträger gelagert ist, und die Hohlwelle 54 mit der Getriebeeingangswelle 26 drehfest verbunden ist.

Ferner kann mit der Schaltanordnung K4 eine mittlere Schaltstellung eingerichtet werden. In der mittleren Schaltstellung sind sowohl die Blockierkupplung als auch die Brückenkupplung geschlossen. In dieser Situation ist das Planetengetriebe 64 in einer verblockten Stellung. Des Weiteren ist eine Verbindung zwischen Hohlwelle 54 und Getriebeeingangswelle 26 hergestellt.

Der Hohlwellenabschnitt 68 ist über eine Zahnradstufe 70 mit der elektrischen Maschine 16 gekoppelt. Die Zahnradstufe 70 weist ein erstes Zahnrad 72 auf, das drehfest auf dem Hohlwellenabschnitt 68 angeordnet ist, und ein zweites Zahnrad 74, das mit dem ersten Zahnrad 72 in Eingriff steht. Das zweite Zahnrad 74 steht mit einem Antriebsritzel 76 der elektrischen Maschine 16 in Eingriff.

Das zweite Zahnrad 74 ist drehbar an einer Zwischenwelle 78 gelagert, die koaxial versetzt zu der Getriebeeingangswelle 26 und vorzugsweise auch koaxial versetzt zu der Getriebeausgangswelle 34 ausgerichtet ist.

Die elektrische Maschine 16 weist eine Maschinenwelle 80 auf, die koaxial zu dem Antriebsritzel 76 ausgerichtet und drehfest hiermit verbunden ist. Die Maschinenwelle 80 ist parallel versetzt sowohl zu der Getriebeeingangswelle 26 als auch zu der Getriebeausgangswelle 34.

Wie obenstehend bereits erörtert, werden die Schaltelemente K0, K1 und K2, sowie die Schaltanordnung K4 mittels Schaltmuffen in die genannten Schaltstellungen geschaltet.

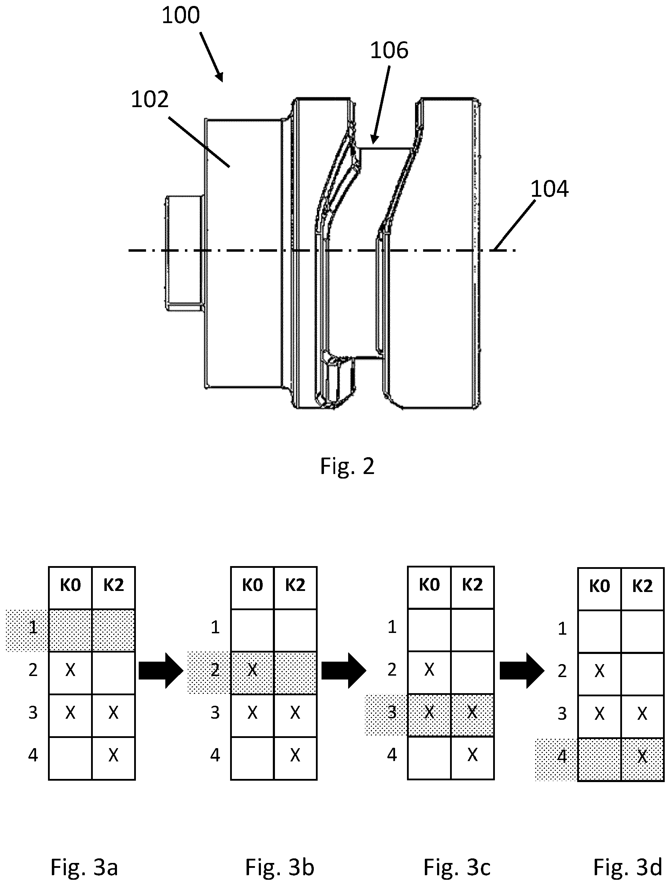

Zum axialen Bewegen und folglich Schalten dieser Schaltmuffen umfasst die Getriebeanordnung 18 eine Schaltvorrichtung mit drehbar gelagerten Schaltwalzen. In dem gezeigten Ausführungsbeispiel, welches zur Durchführung des erfindungsgemäßen Verfahrens geeignet ist, schaltet die in der Figur 2 gezeigte Schaltwalze 100 die beiden Schaltelemente K0 und K2.

Die Schaltwalze 100 weist einen Schaltwalzenkörper 102 auf, der in zwei Drehrichtungen um eine Drehachse 104 verdrehbar gelagert ist, und zwar verdrehbar in Bezug auf ein Gehäuse. Das Gehäuse kann beispielsweise ein Gehäuse der Getriebeanordnung 18 sein.

Der Schaltwalzenkörper 102 ist mit einem nicht dargestellten Antriebsglied verbunden. Das Antriebsglied kann beispielsweise durch ein Zahnrad gebildet sein, das eine Außenverzahnung aufweist. Die Außenverzahnung des Antriebsgliedes kann beispielsweise mit einem Antriebsritzel eines Schaltwalzenmotors in Eingriff stehen. Der Schaltwalzenmotor kann beispielsweise ein elektrischer Motor sein. Durch Ansteuern des Schaltwalzenmotors kann der Schaltwalzenkörper 102 folglich in Rotation in Bezug auf das Gehäuse versetzt werden.

An dem Außenumfang des Schaltwalzenkörpers 102 ist zumindest eine Schaltkontur in Form einer Schaltwalzennut 106 ausgebildet, die wie man es aus der Figuren 2 erkennen kann axial konturiert ist. Die Schaltwalzennut 106 ist endlos ausgeführt, so dass ein beliebiges Verdrehen der Schaltwalze 100 über einen Verdrehwinkel von 360 Grad in beide Drehrichtungen möglich ist.

In diese Schaltwalzennut 106 greift jeweils eine Schaltgabel ein, welcher zudem an der zugeordneten Schaltmuffe angreift. Die Schaltgabel weist dabei einen Nutenstein auf, der in die Schaltwalzennut 106 eingreift. Ein Verdrehen des Schaltwalzenkörpers 102 führt bei geeigneter Ausführung der Schaltwalzennut 106 folglich zu einem axialen Versatz des Schalthebels und folglich zu einem axialen Versatz der Schaltmuffe, was ein Verstellen der Schaltelemente K0 und K2 in die bereits beschriebenen Schaltstellungen zur Folge hat.

Wie es aus der Matrix der Schaltzustände der Schaltelemente K0 und K2 anhand der Figuren 3a - 3d zu erkennen ist, sind 4 Schaltzustände bei einer Drehung der Schaltwalze 100 um 360 Grad in der nachfolgend angegebenen Reihenfolge über den Umfang verteilt schaltbar.
- Schaltzustand 1 (S1): Schaltelement K0 und K2 in der Neutralstellung (Fig. 3a)
- Schaltzustand 2 (S2): Schaltelement K0 in der zweiten Schaltstellung (Verbrennungsmaschine 12 über Schaltelement K0 mit Getriebeeingangswelle 26 gekoppelt) und K2 in der Neutralstellung (Fig. 3b)
- Schaltzustand 3 (S3): Schaltelement K0 in der zweiten Schaltstellung und Schaltelement K2 in der zweiten Schaltstellung (zweites Losrad 60 mit Getriebeausgangswelle 34 drehfest verbunden) (Fig. 3c)
- Schaltzustand 4 (S4): Schaltelement K0 in der Neutralstellung und Schaltelement K2 in der zweiten Schaltstellung (Fig. 3d)

Bei einem weiteren Verdrehen der Schaltwalze 100 in die gleiche Drehrichtung wird nach dem Schaltzustand 4 (S4) wieder der Schaltzustand 1 (S1) erreicht.

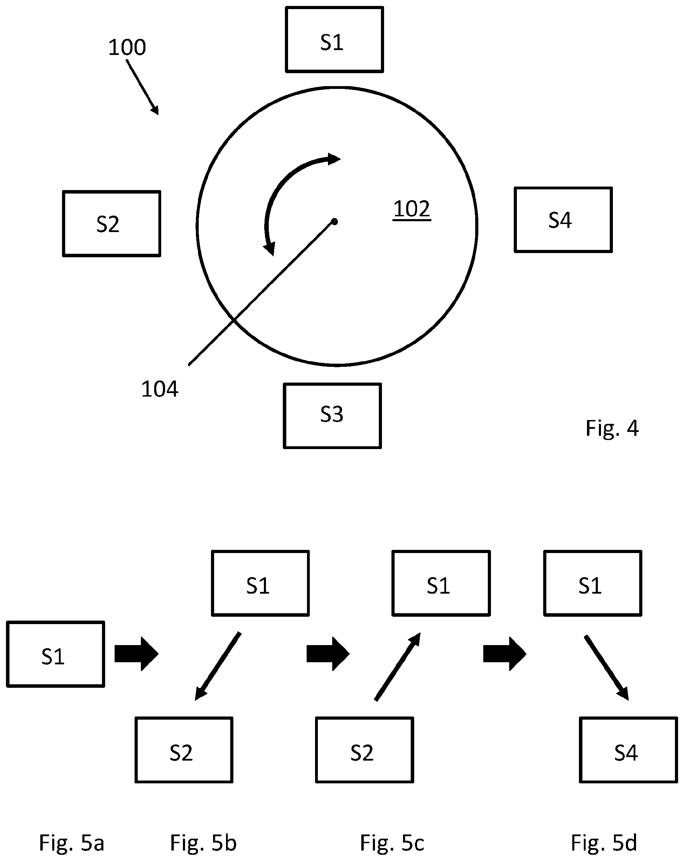

Das erfindungsgemäße Verfahren zum Einlernen der Schaltwalze 100, d.h. zur Festlegung eines Drehwinkels der dem Drehwinkel 0 entspricht wird nachfolgend anhand der schematischen Darstellungen der Figuren 5a - 5d näher beschrieben.

Ausgangsstellung, die in der Figur 5a dargestellt ist, ist in einem ersten Verfahrensschritt zunächst der Schaltzustand 1 (S1), in der sich die beiden Schaltelemente K0 und K2 in der Neutalstellung befinden. Die anderen zuvor beschriebenen Schaltelemente bzw. die Schaltanordnung haben dabei die folgenden Schaltzustände:
- Schaltanordnung K4 in der mittleren Schaltstellung
- Schaltelement K1 in der Neutralstellung

In diesem Zustand des Hybridantriebsstrangs hat das Eingangsglied 28, welches der Ausgangswelle des Verbrennungsmotors 12 entspricht und auch die Kurbelwelle die Drehzahl 0. Dies ist unabhängig davon welche Drehzahl die Maschinenwelle 80 der elektrische Maschine 16 hat.

In einem nachfolgenden Verfahrensschritt, der in der Fig. 5b dargestellt ist, wird zur Bestimmung einer ersten Referenzposition bei einer niedrigen Drehzahl der elektrischen Maschine 16 die Schaltwalze 100 weiter in Richtung des Schaltzustands 2 (S2) verdreht. Genau in dem Moment, wenn das Schaltelement K0 die Freiflugphase überwunden hat, ist dies im Drehzahlsignal der elektrischen Maschine 16 zu erkennen. Die elektrische Maschine 16 bleibt stehen, da sie nun, über das Schaltelement K0, die Eingangswelle 26, die Schaltungsanordnung K4 in der mittleren Schaltstellung, d.h. bei geschalteter Brückenkupplung und geschalteter Blockierkupplung, den Überlagerungsradsatz, die Zahnradstufe 70, dem Antriebsritzel 76 mit dem stehenden Verbrennungsmotor 12 verbunden ist. Diese Situation definiert bei dem entsprechenden Verdrehwinkel der Schaltwalze 100 die erste Referenzposition.

Nach dem Bestimmen der ersten Referenzposition wird die Schaltwalze 100 wieder zurück in den ersten Schaltzustand S1 verdreht, der wie im ersten Verfahrensschritt bereits erläutert einem Neutralgang entspricht. Dies ist in der Figur 5c dargestellt.

Ausgehend von dem Schaltzustand 1 (S1) wird dann zur Bestimmung einer zweiten Referenzposition bei einer niedrigen Drehzahl der elektrischen Maschine 16 die Schaltwalze 100 weiter in den Schaltzustand 4 (S4) verdreht. Dies ist in der Figur 5d dargestellt. Genau in dem Moment, wenn das Schaltelement K2 die Freiflugphase überwunden hat, ist dies im Drehzahlsignal der elektrischen Maschine 16 zu erkennen. Die elektrische Maschine 16 bleibt stehen, da sie nun, über das Schaltelement K2, den dritten Radsatz 56, den Überlagerungsradsatz, die Zahnradstufe 70, das Antriebsritzel 76 mit der stehenden Getriebeausgangswelle 34 verbunden ist. Diese Situation definiert bei dem entsprechenden Verdrehwinkel der Schaltwalze 100 die zweite Referenzposition.

Nachdem nun die beiden Referenzpositionen, die virtuellen Endanschlägen bei zugeordneten Verdrehwinkeln der Schaltwalze 100 entsprechen, bestimmt und in einer zugehörigen Steuereinheit abgespeichert sind, ist der Einlernvorgang abgeschlossen.

### Bezugszeichenliste

- 10: Hybridantriebsstrang
- 12: Verbrennungsmotor
- 14: Anlasser
- 16: elektrische Maschine
- 18: Getriebeanordnung
- 20: Differential
- 22R: angetriebenes Rad
- 22L: angetriebenes Rad
- 26: Getriebeeingangswelle
- 28: Eingangsglied
- 30: Ausgangsglied
- 32: Massenschwungrad
- 34: Getriebeausgangswelle
- 36: Abtriebszahnrad
- 38: Differentialzahnrad
- 40: erster Radsatz
- 42: Festrad
- 44: Losrad
- 46: zweiter Radsatz
- 48: Festrad
- 50: Losrad
- 56: dritter Radsatz
- 58: erstes Losrad
- 60: zweites Losrad
- 54: Hohlwelle
- 64: Planetengetriebe
- 66: Hohlrad
- 68: Hohlwellenabschnitt
- 70: Zahnradstufe
- 72: erstes Zahnrad
- 74: zweites Zahnrad
- 76: Antriebsritzel
- 80: Maschinenwelle
- 83: Planetenräder
- 82: Sonnenrad
- 100: Schaltwalze
- 102: Schaltwalzenkörper
- 104: Drehachse
- 106: Schaltwalzennut

- K0: Schaltelement
- K1: Schaltelement
- K2: Schaltelement
- K4: Schaltanordnung

## Patentansprüche

1. Verfahren zum Einlernen einer Schaltwalze (100) in einem Hybridantriebsstrang (10), wobei der Hybridantriebsstrang (10) eine erste Antriebsmaschine in Form eines Verbrennungsmotors (12) und eine zweite Antriebsmaschine in Form einer elektrischen Maschine (16) sowie eine Getriebeanordnung (18) umfasst, die mit der ersten Antriebsmaschine über ein Schaltelement (K0) verbindbar ist, und die mit der zweiten Antriebsmaschine verbindbar oder verbunden ist, wobei die Getriebeanordnung (18) eine Getriebeeingangswelle (26) und eine Getriebeausgangwelle (34) und eine Vielzahl dazwischen angeordneter Zahnradstufen in Form von Radsätzen (40, 46, 56) umfasst, die über zugeordnete Schaltelemente (K1, K2, K4) schaltbar ausgeführt sind, wobei die Schaltelemente (K0, K1, K2, K4) über zumindest eine Schaltvorrichtung die eine Schaltwalze (100) umfasst, geschaltet werden, **dadurch gekennzeichnet, dass** die zumindest eine Schaltwalze (100) einen Schaltwalzenkörper (102) umfasst, der um eine Schaltwalzenachse (104) in eine erste und eine zweite Drehrichtung endlos drehbar ist, und eine am Umfang der Außenfläche verlaufende umlaufende Schaltkontur aufweist, mit den folgenden Verfahrensschritten:
- Verdrehen der Schaltwalze (100) in einen ersten Schaltzustand (S1), der einer Neutralstellung der Getriebeanordnung (18) entspricht,
- Erzeugen einer niedrigen Drehzahl mittels der elektrischen Maschine (16), wodurch eine Differenzdrehzahl an mindestens zwei Schaltelementen (K0, K2) der Getriebeanordnung (18) entsteht,
- Verdrehen der Schaltwalze (100) in einer ersten Drehrichtung in einen zweiten Schaltzustand (S2), wobei ein erstes Schaltelement (K0) mit der Differenzdrehzahl geschaltet wird, so dass die elektrische Maschine (16) schlagartig auf Null abgebremst wird, wobei ein Drehzahlsignal der elektrischen Maschine (16) erzeugt wird und dieses Drehzahlsignal einer ersten entsprechenden Referenzposition/Verdrehwinkel bei einem Verdrehwinkel der Schaltwalze als virtueller Endanschlag zugeordnet wird,
- Zurückdrehen der Schaltwalze (100) in den ersten Schaltzustand (S1),
- Erzeugen einer niedrigen Drehzahl mittels der elektrischen Maschine (16), wodurch eine Differenzdrehzahl an mindestens zwei Schaltelementen (K0, K2) der Getriebeanordnung (18) entsteht; und
- Verdrehen der Schaltwalze (100) in die zweite Drehrichtung in einen weiteren Schaltzustand, wobei ein zweites Schaltelement (K2) mit der Differenzdrehzahl geschaltet wird, so dass die elektrische Maschine (16) schlagartig auf Null abgebremst wird, wobei ein Drehzahlsignal der elektrischen Maschine (16) erzeugt wird und dieses Drehzahlsignal einer zweiten entsprechenden Referenzposition/Verdrehwinkel bei einem Verdrehwinkel der Schaltwalze als virtueller Endanschlag zugeordnet wird.

2. Verfahren zum Einlernen einer Schaltwalze (100) in einem Hybridantriebsstrang (10) nach Anspruch 1, **dadurch gekennzeichnet, dass** über das erste Schaltelement (K0) die schaltbare Verbindung zwischen Verbrennungsmotor (12) und Getriebeeingangswelle (26) hergestellt wird und das Schaltelement (K0) in die folgenden Schaltstellungen schaltbar ist:
- Neutralstellung in der keine Verbindung zwischen Verbrennungsmotor (12) und Getriebeeingangswelle (26) hergestellt ist
- Schaltstellung in der der Verbrennungsmotor (12) mit der Getriebeeingangswelle (26) verbunden ist

3. Verfahren zum Einlernen einer Schaltwalze (100) in einem Hybridantriebsstrang (10) nach Anspruch 2, **dadurch gekennzeichnet, dass** das zweite Schaltelement (K2) einem dritten Radsatz (56), der die zweite Gangstufe bildet zugeordnet ist, der ein auf der Getriebeausgangswelle (34) gelagertes Losrad (60) umfasst, welches mittels des zweiten Schaltelements (K2) in die folgenden Schaltstellungen schaltbar ist:
- Neutralstellung in der das Losrad (60) drehbar auf der Ausgangswelle (34) gelagert ist
- Schaltstellung in der das zweite Schaltelement (K2) in eine axial verlagerte Stellung geschaltet ist, wodurch eine drehfeste Verbindung zwischen Losrad (60) und Getriebeausgangswelle (34) hergestellt ist, wodurch die Getriebeeingangswelle (26) über den dritten Radsatz (56) mit der Getriebeausgangswelle (34) verbindbar und ein weiterer fakultativer Drehmomentübertragungspfad realisiert werden kann.

4. Verfahren zum Einlernen einer Schaltwalze (100) in einem Hybridantriebsstrang (10) nach einem der vorangehenden Ansprüche, **dadurch gekennzeichnet, dass** bei einer Drehung der Schaltwalze (100) um 360 Grad in eine erste Drehrichtung mittels der Schaltkontur vier Schaltzustände in der nachfolgend angegebenen Reihenfolge über den Umfang verteilt schaltbar sind:
- Schaltzustand 1 (S1): erstes und zweites Schaltelement (K0 und K2) in der Neutralstellung
- Schaltzustand 2 (S2): erstes Schaltelement (K0) in der zweiten Schaltstellung (Verbrennungsmotor mit Getriebeeingangswelle 26 gekoppelt) und zweites Schaltelement (K2) in der Neutralstellung
- Schaltzustand 3 (S3): erstes Schaltelement (K0) in der zweiten Schaltstellung und zweites Schaltelement (K2) in der zweiten Schaltstellung
- Schaltzustand 4 (S4): erstes Schaltelement (K0) in der Neutralstellung und zweites Schaltelement (K2) in der zweiten Schaltstellung

## Claims

1. Method for teaching-in a gear shift drum (100) in a hybrid drive train (10), wherein the hybrid drive train (10) comprises a first drive machine in the form of an internal combustion engine (12) and a second drive machine in the form of an electric machine (16) and a gear arrangement (18) which is connectable to the first drive machine via a shifting element (K0), and which is connectable or connected to the second drive machine, wherein the gear arrangement (18) comprises a gear input shaft (26) and a gear output shaft (34) and a multiplicity of gearwheel stages arranged in between in the form of gear sets (40, 46, 56) which are designed to be shifted via assigned shifting elements (K1, K2, K4), wherein the shifting elements (K0, K1, K2, K4) are shifted via at least one shifting apparatus comprising a shifting roller (100), **characterized in that** the at least one gear shift drum (100) comprises a gear shift drum body (102) which can be rotated endlessly around a gear shift drum axis (104) in a first and a second direction of rotation, and has a circumferential shifting contour on the perimeter of the outer surface, with the following method steps:
- turning the gear shift drum (100) into a first shifting state (S1) corresponding to a neutral position of the gear arrangement (18),
- generating a low speed by means of the electric machine (16), which results in a differential speed on at least two shifting elements (K0, K2) of the gear arrangement (18),
- turning the gear shift drum (100) in a first direction of rotation to a second shifting state (S2), wherein a first shifting element (K0) is shifted at the differential speed, with the result that the electric machine (16) is suddenly braked to zero, wherein a speed signal of the electric machine (16) is generated and this speed signal is assigned to a first corresponding reference position/rotation angle at a rotation angle of the gear shift drum as a virtual end stop,
- turning the gear shift drum (100) back to the first shifting state (S1),
- generating a low speed by means of the electric machine (16), which results in a differential speed on at least two shifting elements (K0, K2) of the gear arrangement (18); and
- turning the gear shift drum (100) in the second direction of rotation into a further shifting state, wherein a second shifting element (K2) is shifted at the differential speed, with the result that the electric machine (16) is abruptly braked to zero, wherein a speed signal of the electric machine (16) is generated and this speed signal is assigned to a second corresponding reference position/rotation angle at a rotation angle of the gear shift drum as a virtual end stop.

2. Method for teaching-in a gear shift drum (100) in a hybrid drive train (10) according to Claim 1, **characterized in that** the shiftable connection between the internal combustion engine (12) and the gear input shaft (26) is established via the first shifting element (K0), and the shifting element (K0) can be shifted into the following shifting positions:
- neutral position, in which no connection is established between the internal combustion engine (12) and the gear input shaft (26);
- shifting position, in which the internal combustion engine (12) is connected to the gear input shaft (26).

3. Method for teaching-in a gear shift drum (100) in a hybrid drive train (10) according to Claim 2, **characterized in that** the second shifting element (K2) is assigned to a third gear set (56) which forms the second gear stage, comprising a idler gear (60) which is mounted on the gear output shaft (34) and can be shifted by means of the second shifting element (K2) into the following shifting positions:
- neutral position, in which the idler gear (60) is rotatably mounted on the output shaft (34);
- shifting position, in which the second shifting element (K2) is shifted into an axially displaced position, as a result of which a fixed connection for conjoint rotation is established between the idler gear (60) and the gear output shaft (34), as a result of which the gear input shaft (26) can be connected to the gear output shaft (34) via the third gear set (56) and a further optional torque transmission path can be realized.

4. Method for teaching-in a gear shift drum (100) in a hybrid drive train (10) according to one of the preceding claims, **characterized in that**, when the gear shift drum (100) is rotated by 360 degrees in a first direction of rotation by means of the shifting contour, four shifting states can be shifted in the following sequence distributed over the circumference:
- shifting state 1 (S1): first and second shifting element (K0 and K2) in the neutral position;
- shifting state 2 (S2): first shifting element (K0) in the second shifting position (internal combustion engine coupled to gear input shaft 26) and second shifting element (K2) in the neutral position;
- shifting state 3 (S3): first shifting element (K0) in the second shifting position and second shifting element (K2) in the second shifting position;
- shifting state 4 (S4): first shifting element (K0) in the neutral position and second shifting element (K2) in the second shifting position.

## Revendications

1. Procédé pour réaliser l'apprentissage d'un tambour (100) de changement de vitesse dans une chaîne cinématique hybride (10), la chaîne cinématique hybride (10) comprenant un premier moteur sous la forme d'un moteur à combustion interne (12) et un deuxième moteur sous la forme d'un moteur électrique (16), ainsi qu'un ensemble boîte de vitesses (18) qui est apte à être relié au premier moteur par l'intermédiaire d'un élément (K0) de changement de vitesse et qui est apte à être relié ou est relié au deuxième moteur, l'ensemble boîte de vitesses (18) comprenant un arbre d'entrée (26) de boîte de vitesses et un arbre (34) de sortie de boîte de vitesses, et une pluralité d'étages de roues dentées agencées entre ceux-ci sous la forme d'un train d'engrenages (40, 46, 56) qui sont réalisés de manière à être aptes à être commutés par l'intermédiaire d'éléments associés (K1, K2, K4) de changement de vitesse, les éléments (K0, K1, K2, K4) de changement de vitesse étant commutés par l'intermédiaire d'au moins un dispositif de changement de vitesse qui comprend un tambour (100) de changement de vitesse, **caractérisé en ce que** ledit au moins un tambour (100) de changement de vitesse comprend un corps (102) de tambour de changement de vitesse qui est apte à tourner sans fin autour d'un axe (104) de tambour de changement de vitesse dans un premier et un deuxième sens de rotation, et qui présente un contour de changement de vitesse périphérique s'étendant sur la périphérie de la surface extérieure, avec les étapes de procédé suivantes :
- faire tourner le tambour (100) de changement de vitesse jusque dans un premier état de commutation (S1) qui correspond à une position de point mort de l'ensemble boîte de vitesses (18),
- générer une faible vitesse de rotation au moyen du moteur électrique (16), ce qui crée une différence de vitesse de rotation au niveau d'au moins deux éléments (K0, K2) de changement de vitesse de l'ensemble boîte de vitesses (18),
- faire tourner le tambour (100) de changement de vitesse dans un premier sens de rotation jusque dans un deuxième état de commutation (S2), un premier élément (K0) de changement de vitesse étant commuté au moyen de la différence de vitesse de rotation, de sorte que le moteur électrique (16) est freiné brusquement à zéro, un signal de vitesse de rotation du moteur électrique (16) étant généré et ce signal de vitesse de rotation étant attribué à une première position/angle de rotation de référence correspondant à un angle de rotation du tambour de changement de vitesse servant de butée finale virtuelle,
- ramener le tambour (100) de changement de vitesse dans le premier état de commutation (S1),
- générer une faible vitesse de rotation au moyen du moteur électrique (16), ce qui génère une différence de vitesse sur au moins deux éléments (K0, K2) de changement de vitesse de l'ensemble boîte de vitesses (18) ; et
- faire tourner le tambour (100) de changement de vitesse dans le deuxième sens de rotation jusque dans un autre état de commutation, un deuxième élément (K2) de changement de vitesse étant commuté au moyen de la différence de vitesse de rotation, de sorte que le moteur électrique (16) est freiné brusquement à zéro, un signal de vitesse de rotation du moteur électrique (16) étant généré, et ce signal de vitesse de rotation étant attribué à une deuxième position/angle de rotation de référence correspondant pour un angle de rotation du tambour de changement de vitesse servant de butée finale virtuelle.

2. Procédé pour réaliser l'apprentissage d'un tambour (100) de changement de vitesse dans une chaîne cinématique hybride (10) selon la revendication 1, **caractérisé en ce que** la liaison commutable entre le moteur à combustion interne (12) et l'arbre d'entrée (26) de la boîte de vitesses est établie via le premier élément (K0) de changement de vitesse et **en ce que** l'élément (K0) de changement de vitesse est apte à être commuté dans les positions de changement de vitesse suivantes :
- position de point mort, dans laquelle aucune liaison n'est établie entre le moteur à combustion interne (12) et l'arbre d'entrée (26) de la boîte de vitesses,
- position de changement de vitesse, dans laquelle le moteur à combustion interne (12) est relié à l'arbre d'entrée (26) de la boîte de vitesses.

3. Procédé pour réaliser l'apprentissage d'un tambour (100) de changement de vitesse dans une chaîne cinématique hybride (10) selon la revendication 2, **caractérisé en ce que** le deuxième élément (K2) de changement de vitesse est associé à un troisième train d'engrenages (56) qui forme le deuxième rapport et qui comprend un pignon fou (60) monté sur l'arbre de sortie (34) de la boîte de vitesses, qui est apte à être commuté au moyen du deuxième élément (K2) de changement de vitesse dans les positions de changement de vitesse suivantes :
- position de point mort, dans laquelle le pignon fou (60) est monté de manière rotative sur l'arbre de sortie (34),
- position de changement de vitesse, dans laquelle le deuxième élément (K2) de changement de vitesse est commuté dans une position décalée axialement, ce qui établit une liaison solidaire en rotation entre le pignon fou (60) et l'arbre de sortie (34) de la boîte de vitesses, ce qui permet de relier l'arbre d'entrée (26) de la boîte de vitesses à l'arbre de sortie (34) de la boîte de vitesses via le troisième train d'engrenages (56) et de réaliser une autre voie de transmission de couple optionnelle.

4. Procédé pour réaliser l'apprentissage d'un tambour (100) de changement de vitesse dans une chaîne cinématique hybride (10) selon l'une des revendications précédentes, **caractérisé en ce que**, lors d'une rotation du tambour (100) de changement de vitesse de 360 degrés dans un premier sens de rotation, quatre états de changement de vitesse sont aptes à être commutés au moyen du contour de changement de vitesse, répartis sur la circonférence, dans l'ordre indiqué ci-dessous :
- état de commutation 1 (S1) : premier et deuxième éléments (KO et K2) de changement de vitesse en position de point mort,
- état de commutation 2 (S2) : premier élément (K0) de changement de vitesse dans la deuxième position de changement de vitesse (moteur à combustion interne relié à l'arbre d'entrée (26) de la boîte de vitesses) et deuxième élément (K2) de changement de vitesse en position de point mort,
- état de commutation 3 (S3) : premier élément (K0) de changement de vitesse dans la deuxième position de changement de vitesse et deuxième élément (K2) de changement de vitesse dans la deuxième position de changement de vitesse,
- état de commutation 4 (S4) : premier élément (K0) de changement de vitesse en position de point mort et deuxième élément (K2) de changement de vitesse dans la deuxième position de changement de vitesse.
